# EUROPEAN PATENT APPLICATION

(11) **EP 4 756 585 A1**
(43) Date of publication of application: **10.06.2026**
(21) Application number: 25176065.8
(22) Date of filing: 13.05.2025
(51) Int. Cl.: G06F 3/041, C03C 15/00, H01L 21/311

(54) **TOUCH DEVICE AND MANUFACTURING METHOD THEREOF**

(30) Priority: 05.12.2024 US 202463728157 P; 21.03.2025 TW 114110664
(71) Applicant: AmTRAN Technology Co., Ltd., New Taipei City 235038 (TW)
(72) Inventor: KUO, Pei-Yi, New Taipei City 235038 (TW)
(74) Representative: Becker, Eberhard

(57) **Abstract**

A touch device (10) including a touch panel (200) and a cover plate (100) is provided. The cover plate (100) is disposed on the touch panel (200). A surface of the cover plate (100) away from the touch panel (200) includes multiple microstructures (MS). The microstructures (MS) are formed by using a yellow light process and a wet etching process, and the microstructures (MS) have a micron-level structure or a nano-level structure. A manufacturing method of the touch device (10) is also provided.

## Description

### BACKGROUND

### Technical Field

The disclosure relates to an electronic device and a manufacturing method thereof, and more particularly, to a touch device and a manufacturing method thereof.

### Description of Related Art

A touch device is currently widely used in various electronic products. A user may use fingers or styluses to operate the touch device. However, during use of the touch device, static electricity may be generated, which may interfere with a touch operation performed by the user, thereby causing sensitivity of the touch device to decrease or the touch operation to fail.

At present, a technical solution to issues caused by the static electricity is to use an antistatic coating layer, a conductive film, or a static discharge material. For the antistatic coating, antistatic performance thereof will be significantly weakened in a high temperature or a high-humidity environment, and it is difficult to maintain uniformity on a large-sized panel. For the conductive film, a manufacturing process thereof is relatively complicated, and it is also difficult to maintain the uniformity on the large-sized panel. For the static discharge material, although antistatic performance thereof are good, it also has relatively high manufacturing costs.

### SUMMARY

The disclosure provides a touch device which, in addition to having a relatively good antistatic effect, also offers relatively high stability and significantly reduced manufacturing costs.

The touch device in the disclosure includes a touch panel and a cover plate. The cover plate is disposed on the touch panel. A surface of the cover plate opposite to the touch panel includes a plurality of microstructures. The microstructures are formed by using a yellow light process and a wet etching process. The microstructures feature micron-scale or nano-scale dimensions.

In one embodiment of the disclosure, the microstructures have a honeycomb structure, a stripe structure, or a dot structure in a top-view direction of the touch device.

In one embodiment of the disclosure, arithmetic mean roughness (Ra) of the microstructures is 0.15 µm to 0.30 µm, ten-point average roughness (Rz) of the microstructures is 1.2 µm to 1.8 µm, and an average width (Rsm) of a roughness profile of the microstructures is 40 µm to 80 µm.

In one embodiment of the disclosure, the microstructures have a depth of 500 nm to 5 µm.

In one embodiment of the disclosure, the material of the cover plate includes soda-lime glass.

The disclosure provides a method for manufacturing a touch device, and the touch device manufactured thereby exhibits relatively good antistatic effect, relatively good stability, and significantly reduced manufacturing costs.

The method for manufacturing the touch device in the disclosure includes the following steps. A cover plate material layer is provided. A yellow light process and a wet etching process are performed on the cover plate material layer to form a cover plate having multiple microstructures. The cover plate is formed on a touch panel to form the touch device.

In one embodiment of the disclosure, a step of performing the yellow light process and the wet etching process on the cover plate material layer includes the following. A photoresist layer is formed on the cover plate material layer. An exposure process and a development process are performed on the photoresist layer to form a photoresist pattern. The wet etching process is performed on the cover plate material layer by using the photoresist pattern.

In an embodiment of the disclosure, before the cover plate is formed on the touch panel, the surface roughness of the microstructures of the cover plate is checked to determine whether it meets a preset criteria: (1) arithmetic average roughness (Ra) of the microstructures is 0.15 µm to 0.30 µm; (2) ten-point average roughness (Rz) of the microstructures is 1.2 µm to 1.8 µm; and (3) an average width (Rsm) of a roughness profile of the microstructures is 40 µm to 80 µm.

In one embodiment of the disclosure, a surface haze value of the cover plate increases by no more than 3% relative to the surface haze value of the cover plate material layer, and glossiness of the cover plate changes by no more than 5% relative to glossiness of the cover plate material layer.

In ones embodiment of the disclosure, an etching solution used in the wet etching process includes hydrofluoric acid, and a concentration of the hydrofluoric acid is 2 wt% to 10 wt%.

Based on the above, in the touch device and its manufacturing method provided in the disclosure, the surface of the cover plate is processed by using the yellow light process and the wet etching process to form the microstructures, which, compared to the technology using an antistatic coating layer, a conductive film, or a static discharge material, offers relatively good antistatic effect, relatively good stability, and significantly reduced manufacturing costs.

### BRIEF DESCRIPTION OF THE DRAWINGS

FIG. 1 is a schematic flow chart of a manufacturing method of a touch device according to an embodiment of the disclosure.
FIGs. 2A to 2C are schematic partial top views of a cover plate of a touch device according to an embodiment of the disclosure.
FIG. 3 is a schematic partial cross-sectional view of a touch device according to an embodiment of the disclosure.

### DETAILED DESCRIPTION OF DISCLOSED EMBODIMENTS

The disclosure is described in detail below with reference to examples and accompanying drawings, but the examples provided are not intended to limit the scope of the disclosure. In addition, the drawings of the disclosure are only for purposes of illustration, and the specific elements in the drawings are not drawn according to actual scale. In order to make it easy for the reader to understand, the same elements will be identified by the same reference numerals in the following description.

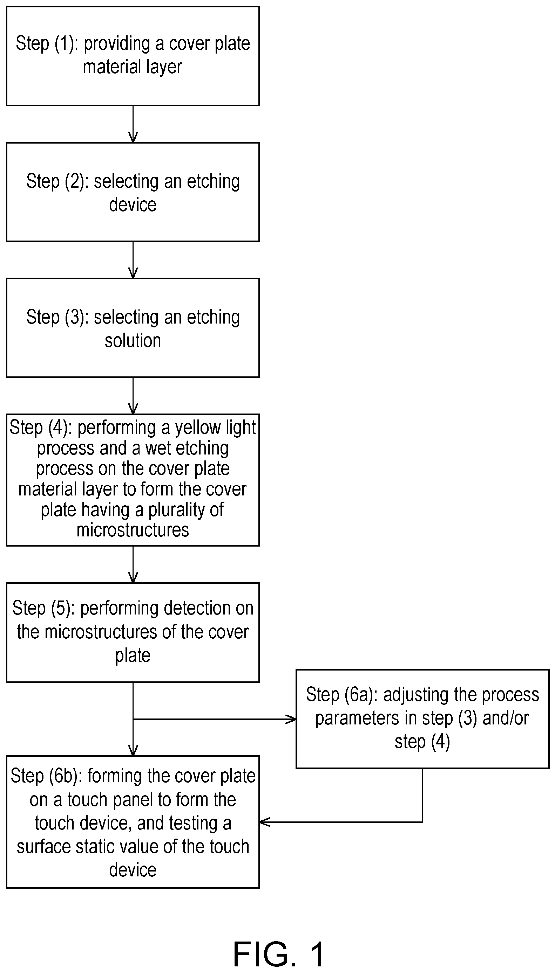

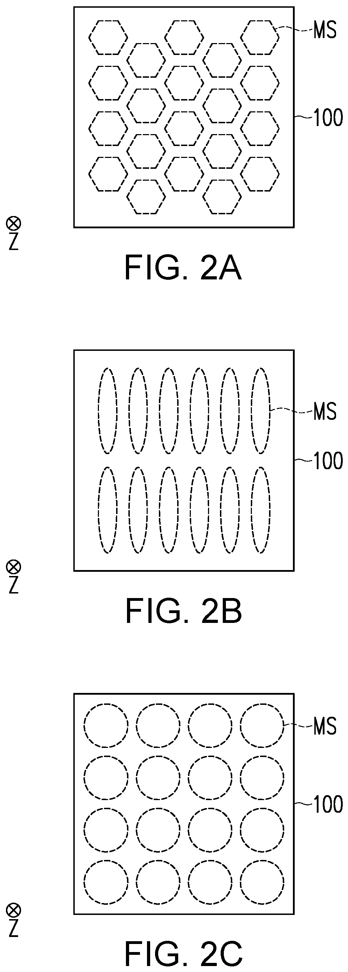

FIG. 1 is a schematic flow diagram of a method for manufacturing a touch device according to an embodiment of the disclosure, and FIGs. 2A to 2C are schematic partial top views of a cover plate of a touch device according to an embodiment of the disclosure.

Referring to FIG. 1, in this embodiment, the touch device may be formed by performing the following steps, but the disclosure is not limited thereto.

Step (1):providing a cover plate material layer.

A material of the cover plate material layer may include glass, for example. In this embodiment, the material is soda-lime glass, but the disclosure is not limited thereto. In detail, the suitable material may be selected according to application scenarios and/or requirements. For example, the may further include aluminosilicate glass, lithium aluminosilicate glass, quartz glass, or other light-transmitting glass, but the disclosure is not limited thereto.

Step (2): selecting an etching device.

In this embodiment, the etching apparatus may be selected according to a size and/or the material of the cover plate material layer, but the disclosure is not limited thereto. For example, the etching apparatus for performing etching on the cover plate material layer may be selected according to the size (e.g., 50 inches) of the cover plate material layer. In some embodiments, the etching apparatus may include a wet etcher, an automatic coater, an automatic stepper, an automatic developer, or a combination thereof, but the disclosure is not limited thereto.

Step (3): selecting an etching solution.

In this embodiment, the etching apparatus may be selected according to the size and/or the material of the cover plate material layer, but the disclosure is not limited thereto. For example, when the material of the cover plate material layer is the soda-lime glass, a material of the etching solution may include hydrofluoric acid. In some embodiments, a concentration of hydrofluoric acid may be 2 wt% to 10 wt%, but the disclosure is not limited thereto. In addition, when the material of the cover plate material layer is the soda-lime glass, the material of the etching solution may further include hydrochloric acid and phosphoric acid. The hydrochloric acid serves as an etching promoter, and the phosphoric acid serves as an etching inhibitor. In some embodiments, a concentration of the hydrochloric acid may be 2 wt% to 10 wt%, and a concentration of the phosphoric acid may be 0.1 wt% to 1 wt%. However, the disclosure is not limited thereto.

Step (4): performing a yellow light process and a wet etching process on the cover plate material layer to form the cover plate having a plurality of microstructures.

In this embodiment, the cover plate material layer is placed in the etching device selected in step (2), and the wet etching process is performed on a surface of the cover plate material layer by using the etching solution selected in step (3), so that the etched surface of the cover plate material layer has the microstructures.

In some embodiments, a method of performing the yellow light process and the wet etching process on the cover plate material layer may include the following steps, but the disclosure is not limited thereto.

Step (4-1): forming a photoresist layer on the cover plate material layer.

In some embodiments, the photoresist layer may be formed on the surface of the cover plate material layer by performing a coating process, but the disclosure is not limited thereto. For example, the photoresist layer may be formed on the surface of the cover plate material layer by first performing a spin coating process, a spray coating process, a slit coating process, or other suitable coating processes.

Step (4-2): performing an exposure process on the photoresist layer.

In some embodiments, a photoresist pattern may be transferred onto the photoresist layer by performing a exposure process using a yellow light stepper , but the disclosure is not limited thereto.

Step (4-3): performing a development process on the photoresist layer.

In some embodiments, the development process may be performed on the photoresist layer subjected to the exposure process to form the desired photoresist pattern.

Step (4-4): performing the wet etching process on the cover plate material layer by using the photoresist pattern.

In some embodiments, the wet etching process may be performed on the surface of the cover plate material layer exposed by the photoresist pattern to remove a portion of the cover plate material layer to form the microstructures. In the present embodiment, the etching solution used in the wet etching process includes hydrofluoric acid at a concentration ranging from 2 wt% to 10 wt%. In some embodiments, etching time ranges from 30 seconds to 90 seconds.

Step (4-5): removing the photoresist pattern.

After the wet etching process is performed on the cover plate material layer, a stripping process may be performed to remove the photoresist pattern. However, the disclosure is not limited thereto.

In this embodiment, the cover plate formed in step (4) may have a micron-level or nano-level texture. In some embodiments, the microstructure of the cover plate may have a groove structure with a depth of 500 nm to 5 µm. In detail, referring to FIGs. 2A to 2C, it is shown that multiple microstructures MS of a cover plate 100 may each have a honeycomb structure, a stripe structure, and a dot structure in a top-view direction (Z). Through a design of the structures, a friction area between the cover plate and a target object may be reduced, thereby effectively reducing generation of static electricity. In addition, the microstructures MS of the cover plate 100 may have a high degree of hydrophobicity due to a lotus effect, which may reduce accumulation of water and/or moisture on a surface of the cover plate 100. Furthermore, the microstructures MS of the cover plate 100 may disperse energy generated by friction through randomness of the texture thereof, thereby further reducing the generation of the static electricity.

Step (5): performing detection on the microstructures of the cover plate.

In some embodiments, the relevant detection may be selectively performed on the cover plate formed in step (4). In detail, it may be detected whether surface roughness of the microstructures of the cover plate meets a preset standard. If not, the following step (6a) is performed to adjust process parameters in the above steps, so that the surface roughness of the microstructures meets the preset standard. In this embodiment, arithmetic mean roughness (Ra) of the microstructures ranges from 0.15 µm to 0.30 µm. Ten-point average roughness (Rz) of the microstructures ranges from 1.2 µm to 1.8 µm. An average width (Rsm) of a roughness profile of the microstructures ranges 40 µm from 80 µm.

Step (6a): adjusting the process parameters in step (3) and/or step (4).

As mentioned above, in some embodiments, if the surface roughness of the microstructures of the cover plate does not meet the preset standard, a concentration of the etching solution in step (3), a process temperature in step (4), and/or process time in step (4) may be adjusted, so that the surface roughness of the microstructures meets the preset standard.

Step (6b): forming the cover plate on a touch panel to form the touch device, and testing a surface static value of the touch device.

In some embodiments, the cover plate may be disposed on a touch electrode in the touch panel and a display panel to protect the touch electrode and the display panel. For example, the cover plate may provide functions such as dustproof, scratch resistance, and waterproof to reduce an impact of an external environment on the touch electrode and the display panel. In some embodiments, the cover plate may be light-transmitting. In this embodiment, after the cover plate obtained from step (5) or step (6a) is formed on the touch panel, antistatic performance of the surface of the cover plate is evaluated.

It should be noted that, in order to comprehensively evaluate the antistatic performance of the surface of the cover plate, a haze value and glossiness measurements are further performed on the surface of the cover plate. In some embodiments, the haze value of the surface of the cover plate formed after the above steps increases by no more than 3%, and the glossiness thereof changes by no more than 5%.

At this point, the manufacturing method of the touch device in this embodiment is completed, but the manufacturing method of the touch device in the disclosure is not limited thereto.

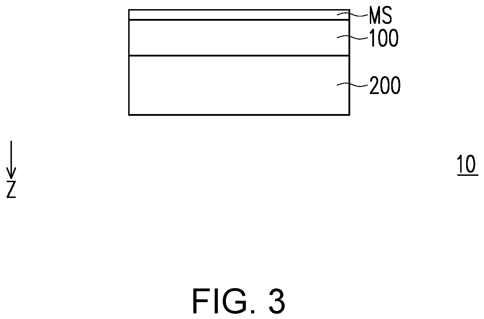

FIG. 3 is a schematic partial cross-sectional view of a touch device according to an embodiment of the disclosure. A touch device 10 in this embodiment is described below with FIG. 3, and repetitive descriptions are omitted.

In this embodiment, the touch device 10 includes the cover plate 100 and a touch panel 200.

The cover plate 100 is, for example, disposed on the touch panel 200. In this embodiment, the surface of the cover plate 100 away from the touch panel 200 includes the microstructures MS. The microstructures MS of the cover plate 100 are formed using the yellow light process and the wet etching process, and these microstructures MS have a micron-level structure or a nano-level structure.

In some embodiments, the microstructures MS of the cover plate 100 have honeycomb structure, stripe structure, or dot structure in the top-view direction (Z) of the touch device 200.

In some embodiments, the microstructures MS of the cover plate 100 have the arithmetic mean roughness (Ra) ranging from 0.15 µm to 0.30 µm. The microstructures MS of the cover plate 100 have the ten-point average roughness (Rz) ranging from 1.2 µm to 1.8 µm. The microstructures MS of the cover plate 100 have the average width (Rsm) of the roughness profile ranging from 40 µm to 80 µm.

In some embodiments, the microstructures MS of the cover plate 100 are groove structures and have the depth ranging from 500 nm to 5 µm.

In some embodiments, the material of the cover plate 100 includes soda-lime glass, but the disclosure is not limited thereto.

The touch panel 200 may include, for example, the display panel (not shown) and the touch electrode (not shown). The display panel may include, for example, a liquid crystal display panel, but the disclosure is not limited thereto. The touch electrode may be, for example, an indium tin oxide film, or may be formed on glass, so as to form a glass-film (GF) structure or a glass-glass (GG) structure with the cover plate 100. However, the disclosure is not limited thereto.

### Experimental example

The disclosure will be described below by way of experimental examples, but the experimental examples are only for illustration and are not intended to limit the scope of the disclosure.

In this experimental example, the cover plate in Example 1 and the cover plate in Comparative Example 1 were both formed by soda-lime glass.

In this experimental example, the cover plate in Example 1 and the cover plate in Comparative Example 1 were rubbed respectively, and a potential of the cover plate after rubbing was measured to evaluate static electricity generation. An ambient temperature during the detection was 23°C±2°C, and an ambient humidity was less than 30%. In the static electricity test, the applied pressure ranged from 0.7 kg to 1.0 kg, the moving distance during pressure application ranged from 10 cm, and 60 back-and-forth tests were completed within 40 seconds. When the test for the static electricity is performed on the cover plate in Example 1 and the cover plate in Comparative Example 1 respectively, an initial static potential thereof was recorded by using a surface static measuring instrument, and the measured static potentials after the back-and-forth tests were performed in a designated area was recorded. A maximum value was taken to be recorded.

In addition, in order to comprehensively evaluate the antistatic performance of the cover plates in Example 1 and Comparative Example 1, their haze and the glossiness were measured respectively to ensure that a test for the antistatic performance was tested under the same conditions.

Hereinafter, the surface roughness and the surface static electricity of the cover plates in Example 1 and Comparative Example 1 were measured, and experimental data thereof were summarized in Table 1.

**Table 1**

| | Cover plate in Example 1 | Cover plate in Comparative Example 1 |
|---|---|---|
| Process performed | Yellow light process and wet etching process | Wet etching process only |
| Haze | 18.9% | 18.3% |
| Glossiness | 37.5 GU | 38 GU |
| Arithmetic mean roughness (Ra) | 0.216 µm | 0.191 µm |
| Ten-point average roughness (Rz) | 1.346 µm | 1.495 µm |
| Average width (Rsm) of the roughness profile | 74.4 µm | 45.4 µm |
| Static potential generated by triboelectrification | 208 V | 226 V |

According to Table 1, since the yellow light process was performed on the cover plate in Example 1, microstructures may be formed in the designated area (the surface of the cover plate material layer exposed by the photoresist layer), which may effectively increase the arithmetic mean roughness (Ra), the ten-point average roughness (Rz), and/or the average width (Rsm) of the roughness profile of the formed surface of the cover plate. On this basis, after the triboelectrification, the static potential of the cover plate in Example 1 may be effectively reduced by about 8% relative to the cover plate in Comparative Example 1.

Based on the above, in the method for manufacturing the touch device provided in an embodiment of the disclosure, the surface of the cover plate is processed using a yellow light process and a wet etching process. Compared to using an antistatic coating layer, a conductive film, or a static discharge material, this approach not only provides relatively better antistatic performance but also reduces process costs.

In addition, the cover plate formed by using the yellow light process and the wet etching process has micron-level structure or nano-level structures, which may effectively avoid a technical issue of coating non-uniformity caused by the use of antistatic coatings or the conductive film, thereby maintaining relatively good stability during long-term use.

In addition, the microstructures of the cover plate formed by the method for manufacturing the touch device provided in an embodiment of the disclosure are directly integrated into its surface, without requiring an additional protective layer, and offer relatively good durability.

Furthermore, in the method for manufacturing the touch device provided in an embodiment of the disclosure, the microstructures of the cover plate are formed by using the yellow light process and the wet etching process, which modifies the physical properties of the cover plate material rather than apply coatings with different chemical properties such as the antistatic coating layer, the conductive film, or the static discharge material. On this basis, the cover plate formed by the manufacturing method of the touch device provided in an embodiment of the disclosure may have relatively good stability in a high-frequency or harsh environment.

## Claims

1. A touch device (10), comprising:
a touch panel (200); and
a cover plate (100) disposed on the touch panel (200),
wherein a surface of the cover plate (100) away from the touch panel (200) comprises a plurality of microstructures (MS), the microstructures (MS) are formed using a yellow light process and a wet etching process, and the microstructures (MS) have a micron-level structure or a nano-level structure.

2. The touch device (10) according to claim 1, wherein the microstructures (MS) have a honeycomb structure, a stripe structure, or a dot structure in a top-view direction (Z) of the touch device (10).

3. The touch device (10) according to claim 1, wherein arithmetic mean roughness (Ra) of the microstructures (MS) ranges from 0.15 µm to 0.30 µm, ten-point average roughness (Rz) of the microstructures (MS) ranges from 1.2 µm to 1.8 µm, and an average width (Rsm) of a roughness profile of the microstructures (MS) ranges from 40 µm to 80 µm.

4. The touch device (10) according to claim 1, wherein the microstructures (MS) have a depth ranging from 500 nm to 5 µm.

5. The touch device (10) according to claim 1, wherein a material of the cover plate (100) comprises soda-lime glass.

6. A method for manufacturing a touch device (10), comprising:
providing a cover plate material layer;
performing a yellow light process and a wet etching process on the cover plate material layer to form a cover plate (100) having a plurality of microstructures (MS); and
forming the cover plate (100) on a touch panel (200) to form the touch device (10).

7. The method according to claim 6, wherein a step of performing the yellow light process and the wet etching process on the cover plate material layer comprises:
forming a photoresist layer on the cover plate material layer;
performing an exposure process and a development process on the photoresist layer to form a photoresist pattern; and
performing the wet etching process on the cover plate material layer using the photoresist pattern.

8. The manufacturing method of the touch device (10) according to claim 6, wherein before the cover plate (100) is formed on the touch panel (200), it is detected whether surface roughness of the microstructures (MS) of the cover plate (100) meets a preset standard in the following:
(1) arithmetic average roughness (Ra) of the microstructures (MS) ranging from 0.15 µm to 0.30 µm;
(2) ten-point average roughness (Rz) of the microstructures (MS) ranging from 1.2 µm to 1.8 µm; and
(3) an average width (Rsm) of a roughness profile of the microstructures (MS) ranging from 40 µm to 80 µm.

9. The manufacturing method of the touch device (10) according to claim 6, wherein a haze value of a surface of the cover plate (100) increases by no more than 3% relative to a haze value of a surface of the cover plate material layer, and glossiness of the cover plate (100) changes by no more than 5% relative to glossiness of the cover plate material layer.

10. The manufacturing method of the touch device (10) according to claim 6, wherein an etching solution used in the wet etching process comprises hydrofluoric acid, and a concentration of the hydrofluoric acid ranges from 2 wt% to 10 wt%.

## Amended claims

### Amended claims in accordance with Rule 137(2) EPC.

1. A touch device (10), comprising:
a touch panel (200); and
a cover plate (100) disposed on the touch panel (200),
wherein a surface of the cover plate (100) away from the touch panel (200) comprises a plurality of microstructures (MS), the microstructures (MS) are formed using a yellow light process and a wet etching process, and the microstructures (MS) have a micron-level structure or a nano-level structure,
**characterized in that**
arithmetic mean roughness (Ra) of the microstructures (MS) ranges from 0.15 µm to 0.30 µm, ten-point average roughness (Rz) of the microstructures (MS) ranges from 1.2 µm to 1.8 µm, and an average width (Rsm) of a roughness profile of the microstructures (MS) ranges from 40 µm to 80 µm,
wherein a haze value of a surface of the cover plate (100) increases by no more than 3% relative to a haze value of a surface of the cover plate material layer, and glossiness of the cover plate (100) changes by no more than 5% relative to glossiness of the cover plate material layer..

2. The touch device (10) according to claim 1, wherein the microstructures (MS) have a honeycomb structure, a stripe structure, or a dot structure in a top-view direction (Z) of the touch device (10).

3. The touch device (10) according to claim 1, wherein the microstructures (MS) have a depth ranging from 500 nm to 5 µm.

4. The touch device (10) according to claim 1, wherein a material of the cover plate (100) comprises soda-lime glass.

5. A method for manufacturing a touch device (10), comprising:
providing a cover plate material layer;
performing a yellow light process and a wet etching process on the cover plate material layer to form a cover plate (100) having a plurality of microstructures (MS); and
forming the cover plate (100) on a touch panel (200) to form the touch device (10),
**characterized in that**
before the cover plate (100) is formed on the touch panel (200), it is detected whether surface roughness of the microstructures (MS) of the cover plate (100) meets a preset standard in the following:
(1) arithmetic average roughness (Ra) of the microstructures (MS) ranging from 0.15 µm to 0.30 µm;
(2) ten-point average roughness (Rz) of the microstructures (MS) ranging from 1.2 µm to 1.8 µm; and
(3) an average width (Rsm) of a roughness profile of the microstructures (MS) ranging from 40 µm to 80 µm,
wherein a haze value of a surface of the cover plate (100) increases by no more than 3% relative to a haze value of a surface of the cover plate material layer, and glossiness of the cover plate (100) changes by no more than 5% relative to glossiness of the cover plate material layer.

6. The method according to claim 5, wherein a step of performing the yellow light process and the wet etching process on the cover plate material layer comprises:
forming a photoresist layer on the cover plate material layer;
performing an exposure process and a development process on the photoresist layer to form a photoresist pattern; and
performing the wet etching process on the cover plate material layer using the photoresist pattern.

7. The manufacturing method of the touch device (10) according to claim 5, wherein an etching solution used in the wet etching process comprises hydrofluoric acid, and a concentration of the hydrofluoric acid ranges from 2 wt% to 10 wt%.
